(19) Europäisches Patentamt
European Patent Office
Office européen des brevets

(11) Publication number: **0 024 061**
**B1**

(12) # EUROPEAN PATENT SPECIFICATION

(45) Date of publication of patent specification: **01.02.84**

(51) Int. Cl.³: **B 01 D 53/34**

(21) Application number: **80200733.6**

(22) Date of filing: **31.07.80**

(54) **A process for the simultaneous removal of nitrogen oxides and sulphur oxides from a gas stream.**

(30) Priority: **14.08.79 NL 7906181**

(43) Date of publication of application:
**18.02.81 Bulletin 81/7**

(45) Publication of the grant of the patent:
**01.02.84 Bulletin 84/5**

(84) Designated Contracting States:
**DE FR GB NL SE**

(56) References cited:
**DE - A - 2 341 241**
**DE - A - 2 532 495**
**DE - A - 2 645 874**
**DE - A - 2 705 434**
**DE - A - 2 705 901**
**DE - A - 2 710 896**
**DE - A - 2 944 754**
**US - A - 4 192 855**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Ploeg, Johannes Everdinus Gerrit**
**12541 Woodside Drive**
**Saratoga California (US)**

(74) Representative: **Puister, Antonius Tonnis, Mr. et al,**
**P.O. Box 302**
**NL-2501 CH The Hague (NL)**

**EP 0 024 061 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# A process for the simultaneous removal of nitrogen oxides and sulphur oxides from a gas stream

The invention relates to a process for the simultaneous removal of nitrogen oxides and sulphur oxides from a gas stream which contains free oxygen in addition to said oxides.

Nitrogen oxides, in particular NO and $NO_2$, occur in all industrial off-gases which are obtained by the combustion of a fuel with the aid of air. If the fossil fuel used also contains sulphur-containing compounds, the industrial off-gases additionally comprise sulphur oxides, such as sulphur dioxide and sulphur trioxide, besides the said nitrogen oxides. As is well known, both types of compounds are considered to be atmospheric pollutants and their removal from said off-gases is therefore desirable.

A process has already been proposed in which both sulphur oxides and nitrogen oxides are simultaneously removed from off-gases by passing said off-gases over a copper-containing solid and further adding ammonia to the gas stream. The latter proposal is based on the known fact that in the presence of oxygen the copper-containing solid acts as acceptor for sulphur oxides, the latter being chemically bound by the acceptor as copper sulphate and it is also known that in the presence of a copper oxide-containing catalyst nitrogen oxides are reduced to free nitrogen with ammonia. The reactions occurring in said process can be represented by the following equations:

$$Cu + O_2 + SO_2 \rightarrow CuSO_4 \quad (1)$$

$$2Cu + O_2 + 2SO_3 \rightarrow 2CuSO_4 \quad (2)$$

$$6NO + 4NH_3 \rightarrow 5N_2 + 6H_2O \quad (3)$$

$$6NO_2 + 8NH_3 \rightarrow 7N_2 + 12H_2O \quad (4)$$

It follows from the above reaction equations (1) and (2) that after a certain time, which is dependent on the quantity by weight of copper deposited on the copper-containing solid, the latter is completely or almost completely loaded with sulphate and no further absorption of sulphur oxides will take place. In order to enable the copper-containing solid to be re-used it is regenerated with a reducing gas, for which use is made of preferably hydrogen- and/or carbon monoxide-containing gas mixtures, optionally diluted with inert components, such as steam, nitrogen and/or carbon dioxide. For commercial use the process will be operated cyclically in at least two reactors in such a way that the copper-containing solid has been regenerated in one reactor whenever that solid in the other reactor has been loaded or has been sufficiently loaded.

In the regeneration of the sulphate-loaded, copper-containing solid, the sulphate is decomposed and the bound sulphur oxide is released as sulphur dioxide. The residue is a solid which contains metallic copper and can be re-used for accepting sulphur oxides if free oxygen is present as described above. The chemistry of the oxidation and reduction reactions which play a part herein is fully known and is discussed in detail in Petroleum & Petrochemical International of July, 1972, pp. 44 and 45.

The above process for the simultaneous removal of nitrogen oxides and sulphur oxides therefore requires, for commercial use, the availability of hydrogen-containing reducing gases. It has been found in practice, however, that many processes to prepare hydrogen-containing gases start from base materials which themselves contain sulphur compounds and the resultant reducing gas or gas mixture, for example obtained by the gasification of coal or heavy residual oil, must in turn be purified itself by means of gas treatment processes. In many cases this may impede the economic use of the above process for the purification of industrial off-gases.

The object of the invention is now to provide a process for the simultaneous removal of both nitrogen oxides and sulphur oxides with the use of hydrogen sulphide-containing regeneration gases. Another object is to carry out said process in such a way that the average conversion of nitrogen oxides in the process is increased.

In the specification below, the solid used to bind the sulphur oxides by means of chemisorption will be referred to as "acceptor". However with respect to the conversion of nitrogen oxides into free nitrogen according to the given equations (3) and (4), this "acceptor" fulfils a catalytic function.

The invention therefore relates to a process for the simultaneous removal of nitrogen oxides and sulphur oxides from a gas stream which contains free oxygen in addition to said oxides by using a metal-containing acceptor for accepting sulphur oxides as metal sulphate with addition of ammonia or an ammonia precursor to the gas stream for the reduction of the nitrogen oxides to nitrogen, in which process the metal sulphate-loaded acceptor is regularly regenerated by means of a reducing gas, after which the regenerated acceptor is re-used for the simultaneous removal of nitrogen oxides and sulphur oxides. The invention is characterized in that the metal sulphate-loaded acceptor is regenerated with a reducing gas which also contains hydrogen sulphide in a content not exceeding 5% by volume, whereupon the regenerated acceptor before being re-used, is subjected to a separate oxidative treatment by supplying a free oxygen-containing gas other than the gas stream to be treated, said free oxygen-containing gas and

reducing gas being supplied to the acceptor co-currently in relation to the gas stream to be treated.

In order to obtain an optimum result in the conversion of nitrogen oxides into free nitrogen by means of ammonia, in the process according to the invention both the hydrogen sulphide-containing reducing gas and the free oxygen-containing oxidation gas are supplied to the acceptor co-currently in relation to the gas stream to be treated. The reason for this will be explained hereinafter.

The hydrogen sulphide-containing regeneration gas preferably contains the hydrogen sulphide in a content between 0.05 and 2.75% by volume. Very good results are obtained with regeneration gases containing 0.1—1.5% by volume of hydrogen sulphide. The oxygen percentage in the free oxygen-containing oxidation gas is not subject to critical limits, and air is a suitable gas mixture for the purpose envisaged. Generally, it may be said that at least such a quantity of free oxygen must be supplied that the acceptor which contains metallic copper after regeneration is oxidized to form an acceptor containing cupric oxide (CuO), while the acceptor portion which contains cuprous sulphide as a result of the presence of hydrogen sulphide in the regeneration gas, is oxidized to form a copper sulphate-containing acceptor. As will be explained further below, however, a high degree of heat generation occurs in the acceptor bed owing to the oxidation. It will therefore be preferred to use an oxidation gas having a relatively low free oxygen content, such as air, the temperature of said gas preferably being much lower than the acceptor bed temperature. Non-preheated air of ambient temperature or air heated to about 200°C can very suitably be used. In the above-mentioned known process for the simultaneous removal of nitrogen oxides and sulphur oxides by means of a metal-containing, in particular copper-containing, acceptor the average conversion, in particular copper-containing, acceptor the average conversion of nitrogen oxides is found to exceed 70% only with difficulty, although it has been found that in a single pass 90% or more of the nitrogen oxides can be converted into nitrogen by means of ammonia and a copper-containing catalyst.

The applicant has found that the cause of the limitation of the reduction of nitrogen oxides to nitrogen to about 70% resides in the particular nature of the process for the removal of sulphur oxides by means of a copper-containing acceptor.

Both the acceptance and the regeneration of the acceptor are carried out at temperatures not exceeding 475°C. The temperature is preferably about 400°C for both process steps. It is found, however, that said oxidation of the reduced acceptor, in which the metallic copper is converted into copper oxide, is attended by a high degree of heat generation. Said oxidation reaction, which takes place at the moment the free oxygen-containing gas stream is contacted with the reduced acceptor, proceeds very rapidly and passes through the acceptor bed with a relatively sharply defined reaction front. Simultaneously, a temperature peak of more than 500°C (about 550—600°C, depending on the copper content of the acceptor) passes through the acceptor bed.

Although the average bed temperature hardly rises because of this temperature peak — it has been found in practice that when flue gases are contacted with the reduced acceptor at a temperature of 400°C the bed temperature may rise by 10 to 30°C — temperatures of 600°C therefore occur locally as a result of the temperature peak passing through the bed. When ammonia is added to the off-gas for the reduction of nitrogen oxides, partly as a result of said high starting temperature at the first addition after regeneration of the acceptor, ammonia will oxidize and precisely additional nitrogen oxide will be formed according to the reaction:

$$4\,NH_3 + 5\,O_2 \xrightarrow{\text{Cu-cat.}} 4\,NO + 6\,H_2O \quad (5)$$

This reverse reaction, which will occur above 500°C and in which the copper-containing acceptor also acts as catalyst, causes the average conversion not to exceed 70%.

It would seem that a simple remedy to this problem is obvious.

Care should be taken that in the initial phase of the desulphurization process, when the flue gases to be treated are contacted with the reduced catalyst, no ammonia is present in or is added to these gases. In this respect it should be borne in mind, however, that the first quantities of flue gas which have passed through the acceptor bed will indeed be free of sulphur oxides, but still contain nitrogen oxides. Considering the quantity of nitrogen oxides thus slipped through, an average conversion of up to 90% can be calculated.

The process according to the invention, in which both a hydrogen sulphide-containing regeneration gas and a separate oxidative treatment of the regenerated acceptor are used, eliminates various drawbacks of the process already proposed. Although the above-mentioned relatively sharply defined reaction front caused by oxidation of the acceptor passes through the bed rapidly, it is found in practice that initially also some sulphur dioxide nevertheless slips through the bed at first when the reduced acceptor again contacts the gas stream to be treated which contains free oxygen in addition to nitrogen oxides and sulphur oxides. The metallic copper must first be oxidized to copper oxide before the acceptor binds the sulphur oxides as sulphate. In spite of the fact that flue gas contains sufficient oxygen for the full oxidation of copper to copper oxide, there is

nevertheless a deficiency of copper oxide for a short period of time. By using a separate oxidation step with an oxygen-containing gas other than the gas stream to be treated, the latter drawback is eliminated.

In the use of a reducing gas which also contains not more than 5% by volume of hydrogen sulphide, part of the acceptor bed is in the sulphide form after regeneration. In this respect it should be borne in mind, however, that if said regeneration takes place countercurrently in relation to the gas stream to be treated, the bed portion of the acceptor which is in sulphided is precisely on the opposite side to that where the off-gas to be treated is introduced. During the oxidative treatment said copper sulphide present is partly converted into copper oxide and partly into copper sulphate according to the gross reaction equation

$$Cu_2S + 2\tfrac{1}{2}O_2 \longrightarrow CuSO_4 + CuO \quad (6)$$

Although the reaction is chemically in accordance with theory, experiments reveal that about half the sulphur bound as sulphide is liberated as sulphur dioxide during the preoxidation, according to the reaction equation

$$Cu_2S + 2O_2 \longrightarrow 2CuO + SO_2 \quad (7)$$

The foregoing should be explained by means of reaction kinetics. Now, if the oxidation step is carried out with a free oxygen-containing gas which is introduced countercurrently in relation to the regeneration gas, said liberated sulphur dioxide is removed from the reactor and increases the air pollution problem. In other words, it results in a decrease in the average $SO_2$-removal effectiveness of the process. Therefore, the oxidation gas must be supplied co-currently in relation to the hydrogen sulphide-containing reducing gas. For in this case the liberated $SO_2$ is in fact again bound as sulphate further downstream in the reactor by CuO already formed.

In order to prevent that the pair of the acceptor bed which first comes into contact with the industrial off-gas to be purified to which $NH_3$ has been added, is overheated as a result of the oxidation step, both the reducing gas and the oxidation gas are supplied co-currently in relation to the industrial off-gas to be treated.

As explained, an excessive acceptor bed temperature has an adverse effect on the $NO_x$ conversion (by $NO_x$ is meant below both NO and $NO_2$ either jointly or severally) as a result of the formation of NO from $NH_3$. Since said acceptor bed temperature is also dependent on the metal content of the acceptor used, the acceptor is preferably so used in a zone that in that part of said zone which first comes into contact with the reducing gas and then with the oxidation gas, the metal content of the acceptor is lower than that of that part of the zone which comes into contact with said gases at a later stage. The metal content in the first part of the zone preferably lies between 1 and 5% by weight, based on the acceptor, and in the other part between 4 and 15% by weight, also based on the acceptor. The part of the zone the acceptor of which has a lower metal content is preferably not more than 45% of the total zone and constitutes more preferably 20—40% of said zone.

Although the process of the invention is in principle suitable for any metal capable of binding sulphur oxides as sulphate in the presence of oxygen, which sulphate can be regenerated by means of a reducing gas while said metal should also possess catalytic activity for reducing NOX to nitrogen in the presence of ammonia, said process will be further discussed with reference to copper-containing acceptors. Other suitable metals from which a choice may be made are those metals mentioned in an article in Ind. Eng. Chem. Process Des. Develop. Vol. *10* No. 3, 1971, pp. 384—389, entitled "Selection of Metal Oxides for Removing $SO_2$ from Flue Gas".

The great advantage of in particular copper-containing acceptors is that, after being loaded with sulphur oxides with formation of copper sulphate, they can be regenerated at the same or practically the same temperature as that at which acceptance took place. Operation at acceptance and regeneration temperatures which differ slightly from each other is not only advantageously from the point of view of heat economy, but is also of great importance to the life of the acceptor. For an economically justified process it is necessary that the acceptor used should be capable of being regenerated some thousands of times without losing too much stability and activity. It will not be easy to reach such a long life with acceptors which must be heated and/or cooled over a relatively wide temperature range at every regeneration. The chemical and physical stability of the metal-and/or metal compounds-containing acceptors can in fact be impaired considerably by this type of temperature fluctuations.

Partly depending on the specific surface area of the material used, the metal content of the acceptor can vary within wide limits. The metal content is usually 1—15% by weight, based on finished acceptor. Optimum results are obtained with acceptors which contain 4—10% by weight of copper, while, as stated, a quantity of 1—5% by weight of copper can be used for the part of the acceptor bed having a lower metal content. The carrier material used is preferably an activated alumina such as gamma-alumina, an alumina such as alpha-alumina, or a mixture of gamma- and alpha-alumina, although in principle all solids are eligible which are temperature-resistant and remain unaffected by sulphur oxides under the prevailing conditions.

Removal of sulphur compounds as sulphur oxides under oxidative conditions, i.e. in the presence of oxygen, is preferably carried out at temperatures of 325—475°C. Regeneration

under reducing conditions takes place in the same temperature range. Acceptance and regeneration are preferably carried out within said range at the same or practically the same temperature.

For the regeneration of acceptors of the above type a reducing gas, such as hydrogen or a hydrogen-containing gas diluted with an inert gas and/or steam, is preferably used. Hydrocarbon-containing gases, such as the off-gas from a catalytic reformer, are also suitable for the regeneration of sulphur oxides-loaded metal-containing catalysts. Suitable hydrogen-containing gases can be obtained by partial oxidation or steam-reforming of hydrocarbons.

The addition of an inert gas and/or steam to the reducing gas has a dual purpose. First, the regeneration of the loaded acceptor with formation of sulphur dioxide is an exothermic reaction. Moreover, it should be borne in mind that unconverted copper oxide is reduced to the metallic element, and this has an additional thermal effect. Dilution with, for example, steam ensures that this liberated heat is removed. Secondly, this dilution causes the concentration of reducing gas, in particular hydrogen, to remain low, which is of advantage to the process of the invention, since the subsequent purge with inert gas, such as steam, then takes less time.

Hydrogen- and carbon monoxide-containing gases diluted with steam can be obtained in a simple manner by steam-reforming of natural gas, methane, and/or lower homologues thereof. Naphtha can also very suitably be used. The mixture obtained by steam-reforming over a catalyst contains about 35—40% by volume of steam. More steam can be added to this steam-containing mixture up to a steam content of 60—95% by volume. The steam-reforming can also be carried out in such a manner that a gas mixture is obtained which contains the desired quantity of steam. The hydrogen-containing reducing gas obtained by steam-reforming is directly introduced into the acceptor bed to be regenerated.

When a "parallel passage" reactor is used, the gas velocities applied are such that the linear gas velocity in the gas channels lies between 2 and 25 m/s. When fixed acceptor beds are used, the space velocity is 1000—10,000 vol./vol. of acceptor hour and preferably 2000—5000 vol./vol. of acceptor hour.

For the reduction of nitrogen oxides ammonia is supplied to the gas to be treated in a quantity of 1—3 times the stoichiometric quantity required. This quantity is preferably 1.1—2.0 times the quantity required.

According to the process of the invention, practically quantitative reduction of nitrogen oxides can be reached. Ammonia is usually not detected in the flue gases treated, not even if a considerable excess in respect of the stoichiometric quantity is added.

Instead of gaseous ammonia it is also possible to add ammonia precursors, such as an aqueous ammonia solution or an ammonia carbonate solution, urea, hydrazine, ethylene diamine or hexamethylene diamine.

The process according to the invention will be further illustrated with reference to the Examples 1 to 4 inclusive.

Example 1
(Comparative example)

A power station with a capacity of 125 MW is fired with coal containing 3.5% by weight of sulphur with an excess air supply of 5—10%. The power station produces a flue gas in a quantity of 375,000 $Nm^3/h$, which contains 0.26% by volume of sulphur dioxide ($SO_2$) and 0.05% by volume of nitrogen oxides ($NO_x$). For the removal of $SO_2$ said flue gas is treated in a flue gas desulphurization plant having two reactors which are alternately in the acceptance phase and in the regeneration phase. The reactors are of the "parallel passage" type and have an acceptor bed of such a length that a desired $SO_2$ removal of 90% is reached at the chosen gas hourly space velocity (GHSV) of about 2000 $Nm^3/m^3h$. As acceptor for the sulphur dioxide use is made of an alumina-based acceptor which contains copper as the active metal. The flue gas is passed through one reactor until it is no longer possible to maintain the desired $SO_2$ removal effectiveness of 90% because an ever-increasing quantity of $SO_2$ slips through with the treated flue gas. The flue gas is then supplied to the other reactor under the same conditions, while the sulphate-loaded acceptor in the former reactor is regenerated. The regeneration gas used is a reducing gas which contains about 20% by volume of reducing gas components ($H_2$, CO and/or $CH_4$), the rest consisting of water vapour (45% by volume), nitrogen and carbon dioxide, said gas being free of any sulphur compound. Regeneration is carried out at about the same temperature as the acceptance takes place.

In order to prevent an explosion hazard when switching from one phase to the other, the reactors are invariably purged with steam before either flue gas or regeneration gas is introduced into either of the reactors.

When an acceptor containing 5.5% by weight of copper is used in an acceptor bed length of 7 m at a temperature of 420°C, the flue gas from the above-mentioned power station is passed in the quantity stated through the first reactor for 80 minutes. Subsequently, the $SO_2$ removal effectiveness falls below the desired 90% and the process is switched to the second identical reactor. The sulphate-loaded acceptor in the first reactor is reduced (after having been purged with steam) for 70 minutes with 15,200 $Nm^3/h$ of the reducing gas which is supplied to the reactor at about 420°C countercurrently in relation to the direction of flow of the flue gas. (Based on a continuous offtake for

the entire cycle period of 80 minutes the consumption of regeneration gas would be 13,300 $Nm^3/h$). The quantity of gas and the duration of supply are so chosen that after termination of the regeneration about 15% of the acceptor bed is not yet regenerated, so that the acceptor present therein is still in the sulphate form. Since the regeneration gas is supplied to the reactor countercurrently, said non-regenerated part of the bed is located on the flue gas inlet side of the reactor.

In order now also to remove nitrogen oxides from the flue gas by conversion into nitrogen, ammonia ($NH_3$) is added to the flue gas when the latter is again supplied to the first reactor after regeneration, the $SO_2$ removal effectiveness in the second reactor having decreased below 90%. The quantity of ammonia added is so chosen that the $NH_3/NH_x$ ratio in the flue gas is 1.1. At this ratio an $NO_x$ conversion of about 90% is reached. By operating the two reactors alternately under the specified conditions of acceptance and regeneration with continuous addition of $NH_3$ in the ratio stated, a simultaneous removal of nitrogen oxides and sulphur oxides of 90% is reached.

Example 2
(Comparative example)

With the use of a hydrogen sulphide-containing regeneration gas — the other gas components further remaining the same — the flue gas from the power station described in Example 1 is freed from sulphur dioxide and nitrogen oxides in a similar plant with two reactors of said type. The plant is adapted with respect to the length of the acceptor bed and acceptor used. The acceptor bed in both reactors is divided into a part with an acceptor containing only 2.3% by weight of copper (2 metres) and a part containing acceptor with 5.5% by weight of copper (7 metres). The bed portion with the acceptor having the lower copper content is nearest the regeneration gas inlet. Now, if the loaded acceptor is regenerated with the $H_2S$-containing reducing gas supplied countercurrently, the first bed portion of 2 metres acts as acceptor bed for the hydrogen sulphide and the regenerated bed is sulphided to a $Cu_2S$-containing bed. If after the regeneration the flue gas is again supplied to the reactor countercurrently in relation to the regeneration gas, it is found that at the start of the acceptance phase the cuprous sulphide is oxidized to CuO and $CuSO_4$ and about 50% of the sulphur which is absorbed as sulphide is now released as $SO_2$ and discharged from the reactor by the flue gas already treated. In order to maintain an average $SO_2$ removal effectiveness of 90% with a longer bed length as compared with Example 1, and under said conditions the acceptance time should be reduced from 80 to 65 minutes. Consequently, regeneration must take place more frequently and the regeneration of the loaded acceptor must be carried out more rapidly. To this end a quantity of 19,200 $Nm^3/h$ of reducing gas (with 0.75% by volume of $H_2S$) is required for 55 minutes or a quantity of 16,250 $Nm^3/h$ based on a continuous offtake for the cycle period of 65 minutes, that is to say more than required in Example 1. However, when supplying ammonia in a ratio of 1.1 to $NO_x$, a nitrogen oxide removal of 90% is reached.

Example 3

The process of Example 2 is repeated, but now with a separate oxidation step between regeneration and acceptance and the part of the acceptor bed containing acceptor with 5.5% by weight of copper being shortened from 7 to 6 m.

In order to fully oxidize the acceptor, which contains metallic copper after regeneration, in which oxidation copper oxide is formed, a quantity of 40,000 $Nm^3/h$ of hot air of 400°C is supplied to the reactor in 10 minutes before resuming acceptance. Said hot air is introduced co-currently in relation to the regeneration gas which contains hydrogen sulphide. The inherent advantage is that the $SO_2$ liberated in that pre-oxidation step by oxidation of the copper sulphide as described in Example 2 is now bound as sulphate further downstream in the reactor by the acceptor already oxidized, so that this time no $SO_2$ is discharged from the reactor. Another consideration is that by the use of a pre-oxidation step sufficient oxidized acceptor is already present for the catalytic conversion of $NO_x$ into nitrogen, so that no part of the bed need be left unregenerated as in Example 2, with the result that the bed portion containing the acceptor with high copper content can be shortened to 6 m as stated above. Owing to the preoxidation of the copper-containing acceptor, however, the acceptor bed temperature on the flue gas supply side has become so high that it is advisable not to inject $NH_3$ right from the start of the acceptance, but to wait some minutes before again adding $NH_3$ to the flue gas. However, as a result 90% conversion of the nitrogen oxides is not reached. The acceptance can now take place for 100 minutes before — after purging — the catalyst has to be regenerated for 80 minutes with 15,600 $Nm^3/h$ of regeneration gas with 0.75% by volume of $H_2S$ (equivalent to a continuous offtake of 12,500 $Nm^3/h$ for the entire cycle period of 100 minutes). Subsequently, a pre-oxidation step as described is repeated.

Example 4

The process of Example 3 is repeated, but now with all gases co-currently in relation to the flue gas. The bed portion with acceptor having the lower copper content is now of course on the flue gas supply side.

Since the temperature peak caused by the pre-oxidation is now displaced downstream and on the flue gas supply side copper oxide is

already present owing to the pre-oxidation, the removal of nitrogen oxides by means of the addition of ammonia can now be started immediately at the beginning of the acceptance phase.

Further, it is not necessary to oxidize the entire acceptor bed in the pre-oxidation step, since the oxidation is completed in the normal manner after the start of the acceptance phase by the free oxygen present in the flue gas. Compared with Example 3 the pre-oxidation period is therefore shortened to 5 minutes. When the addition of ammonia remains unchanged, however, a nitrogen oxides removal of more than 90% is obtained.

The foregoing has less effect on the removal of sulphur dioxide and for a 90% removal an acceptance phase of 100 minutes is permitted. Regeneration takes place for 85 minutes with 14,700 Nm$^3$/h of $H_2S$-containing reducing gas (equivalent to a continuous offtake of 12,500 Nm$^3$/h of reducing gas for the entire cycle period of 100 minutes).

Example 5

The preferred embodiment in parallel flow according to Example 4 can also be used in such a manner that the special zone containing an acceptor with a lower copper content serving to absorb the hydrogen sulphide present in the regeneration gas is no longer specially required. In order to avoid the high temperature peaks during the pre-oxidation use should now be made of a relatively low-temperature pre-oxidation gas.

This process was carried out in a reactor of the same type as described above, but exclusively acceptor with 5.5% by weight of copper was used in a bed length of 6 m. In an acceptance time of 80 minutes 90% $SO_2$ removal was reached. After the bed had been purged with steam, the acceptor was regenerated for 65 minutes cocurrently with 16,400 Nm$^3$/h of reducing gas containing 0.75% by volume of $H_2S$ (equivalent to a continuous offtake of 13,300 Nm$^3$/h for the entire cycle period of 80 minutes). After the bed had again been purged, the acceptor was pre-oxidized for five minutes with 40,000 Nm$^3$/h of non-preheated air (20°C), whereupon the reactor was again ready for the next acceptance phase. Ammonia was added to the flue gas for the whole acceptance phase, a nitrogen oxides removal of 90% being obtained.

The results and the process conditions of Examples 1—5 are summarized in the following Table.

TABLE

| No. | Acceptance time, min. | Acceptor bed length, m | | Reducing gas, $Nm^3/h$ 5) | | | Direction of flow of reducing gas 1) | | Regeneration period and percentage 4) | | Oxidation gas 2) | | Direction of flow of oxidation gas 1) | | Addition of ammonia 3) | |
|---|---|---|---|---|---|---|---|---|---|---|---|---|---|---|---|---|
| | | 2.3%Cu | 5.5%Cu | discontinuous | continuous | $H_2S$, % by vol. | co-currently | counter-currently | min. | unregenerated bed portion | $Nm^3/h$ | time min. | co-currently | counter-currently | immediately | after start |
| 1 | 80 | – | 7 | 15,200 | 13,300 | – | | + | 70 | 15% | – | | | | + | |
| 2 | 65 | 2 | 7 | 19,200 | 16,250 | 0.75 | | + | 55 | 15% | – | | | | + | |
| 3 | 100 | 2 | 6 | 15,600 | 12,500 | 0.75 | | + | 80 | 0% | 40,000 | 10 | | + | | + |
| 4 | 100 | 2 | 6 | 14,700 | 12,500 | 0.75 | + | | 85 | 0% | 40,000 | 5 | + | | + | |
| 5 | 80 | – | 6 | 16,400 | 13,300 | 0.75 | + | | 65 | 0% | 40,000 | 5 | + | | + | |

1) The direction of flow relates to that of the flue gas supplied to the reactor.

2) Relates to the supply of a separate oxidation gas after regeneration, but before the supply of flue gas.

3) Added in such a quantity that the $NH_3/NO$ ratio of the flue gas to be treated is about 1.1.

4) Regeneration percentage: here is specified that part of the acceptor bed which is deliberately not regenerated and the percentage is therefore 100% less the value stated.

5) Reducing gas: here are specified both the gas velocity on discontinuous basis related to the regeneration time as stated in the fifth column, and on continuous basis related to the acceptance time (cycle period) stated in the first column.

**Claims**

1. A process for the simultaneous removal of nitrogen oxides and sulphur oxides from a gas stream which contains free oxygen in addition to said oxides by using a metal-containing acceptor for accepting sulphur oxides as metal sulphate with addition of ammonia or an ammonia precursor to the gas stream for the reduction of the nitrogen oxides to nitrogen, in which process the metal sulphate-loaded acceptor is regularly regenerated by means of a reducing gas, after which the regenerated acceptor is re-used for the simultaneous removal of nitrogen oxides and sulphur oxides, characterized in that the metal sulphate-loaded acceptor is regenerated with a reducing gas which also contains hydrogen sulphide in a content not exceeding 5% by volume, whereupon the regenerated acceptor, before being re-used, is subjected to a separate oxidative treatment by supplying a free oxygen-containing gas other than the gas stream to be treated, said free oxygen-containing gas and reducing gas being supplied to the acceptor co-currently in relation to the gas stream to be treated.

2. A process as claimed in claim 1, characterized in that the hydrogen sulphide-containing reducing gas contains hydrogen sulphide in a content between 0.05 and 2.75% by volume.

3. A process as claimed in claim 1 or 2, characterized in that the acceptor is so used in a zone that in that part of said zone which first comes into contact with the reducing gas and then with the oxidation gas the metal content of the acceptor is lower than that of that part of the zone which comes into contact with said gases at a later stage.

4. A process as claimed in claim 3, characterized in that the metal content in the first part of the zone lies between 1 and 5% by weight, based on the acceptor, and in the other part between 4 and 10% by weight, also based on the acceptor.

5. A process as claimed in claim 3 or 4, characterized in that the part of the zone the acceptor of which has a lower metal content is not more than 45% of the total zone, in particular 20—40% of the zone.

6. A process as claimed in claim 1, characterized in that non-preheated air or air having a temperature which is much lower than the acceptor bed temperature is used for the separate oxidative treatment.

**Revendications**

1. Un procédé pour l'élimination simultanée des oxydes d'azote et des oxydes de soufre d'un courant de gaz qui contient de l'oxygène libre en plus de ces oxydes par utilisation d'un accepteur contenant un métal pour fixer les oxydes de soufre sous la forme de sulfate de métal avec addition d'ammoniac ou d'un progéniteur d'ammoniac au courant de gaz pour la réduction des oxydes d'azote en azote, procédé dans lequel l'accepteur chargé de sulfate est régulièrement régénéré au moyen d'un gaz réducteur, après quoi l'accepteur régénéré est réutilisé pour l'élimination simultanée des oxydes d'azote et des oxydes de soufre, caractérisé en ce que l'accepteur chargé de sulfate de métal est régénéré au moyen d'un gaz réducteur qui contient aussi de l'hydrogène sulfuré dans une proportion ne dépassant pas 5% en volume, après quoi l'accepteur régénéré, avant d'être réutilisé, est soumis à un traitement oxydant séparé par arrivée d'un gaz contenant de l'oxygène autre que le courant de gaz à traiter, ce gaz contenant de l'oxygène libre et le gaz réducteur étant amenés en contact avec l'accepteur en écoulement parallèle par rapport au courant de gaz à traiter.

2. Un procédé selon la revendication 1, caractérisé en ce que le gaz réducteur contenant de l'hydrogène sulfuré contient une proportion d'hydrogène sulfuré comprise entre 0,05 et 2,75% en volume.

3. Un procédé selon la revendication 1 ou 2, caractérisé en ce que l'accepteur est utilisé dans une zone de manière que dans la partie de cette zone qui vient initialement en contact avec le gaz réducteur et ensuite avec le gaz d'oxydation, la teneur en métal de l'accepteur soit plus basse que celle de la partie de la zone qui vient en contact avec ces gaz à un stade ultérieur.

4. Un procédé selon la revendication 3, caractérisé en en ce que la teneur en métal dans la première partie de la zone est comprise entre 1 et 5% en poids, par rapport à l'accepteur, et dans l'autre partie entre 4 et 10% en poids, également par rapport à l'accepteur.

5. Un procédé selon la revendication 3 ou 4, caractérisé en ce que la partie de la zone de l'accepteur qui a une plus basse teneur en métal ne constitue pas plus de 45% de la zone totale, en particulier est de 20—40% de cette zone totale.

6. Un procédé selon la revendication 1, caractérise en ce que de l'air non préchauffé ou de l'air ayant une température bien plus basse que la température du lit d'accepteur est utilisé pour le traitement oxydant séparé.

**Patentansprüche**

1. Ein Verfahren für die gleichzeitige Entfernung von Stickstoffoxiden und Schwefeloxiden aus einem Gasstrom, welcher freien Sauerstoff zusätzlich zu den besagten Oxiden enthält, unter Verwendung eines metallhaltigen Akzeptors für die Beladung mit Schwefeloxiden als Metallsulfat mit Zusatz von Ammoniak oder einer Ammoniak-Vorverbindung zu dem Gasstrom für die Reduktion der Stockstoffoxide zu Stickstoff, in welchem Verfahren der mit Metallsulfat beladene Akzeptor wiederkehrend mittels eines Reduktionsgases

regeneriert wird, worauf der regenerierte Akzeptor für die gleichzeitige Entfernung von Stickstoffoxiden und Schwefeloxiden wiederverwendet wird, dadurch gekennzeichnet, daß der mit Metallsulfat beladene Akzeptor mit einem reduzierenden Gas regeneriert wird, welches auch Schwefelwasserstoff in einer 5 Volumenprozent nicht überschreitenden Menge enthält, worauf der regenerierte Akzeptor vor der Wiederverwendung einer getrennten oxidativen Behandlung unterworfen wird, indem ein freien Sauerstoff enthaltendes Gas zugeführt wird, welches nicht der zu behandelnde Gasstrom ist, wobei das freien Sauerstoff enthaltende Gas und das reduzierende Gas dem Akzeptor in bezug auf den zu behandelnden Gasstrom im Gleichstrom zugespeist werden.

2. Ein Verfahren wie in Anspruch 1 beansprucht, dadurch gekennzeichnet, daß das Schwefelwasserstoff enthaltende reduzierende Gas Schwefelwasserstoff in einer Menge zwischen 0,05 und 2,75 Volumenprozent enthält.

3. Ein Verfahren wie in Anspruch 1 und 2 beansprucht, dadurch gekennzeichnet, daß der Akzeptor so in einer Zone verwendet wird, daß in demjenigen Teil der besagten Zone, welche zuerst mit dem reduzierenden Gas und anschließend mit dem oxidierenden Gas in Berührung kommt, der Metallgehalt des Akzeptors niedriger ist als derjenige in dem Teil der Zone, welcher mit den besagten Gasen in einem späteren Stadium in Berührung kommt.

4. Ein Verfahren wie in Anspruch 3 beansprucht, dadurch gekennzeichnet, daß der Metallgehalt in dem ersten Teil der Zone zwischen 1 und 5 Gewichtsprozent, bezogen auf den Akzeptor, und in dem anderen Teil zwischen 4 und 10 Gewichtsprozent, gleichfalls bezogen auf den Akzeptor, liegt.

5. Ein Verfahren wie in Anspruch 3 oder 4 beansprucht, dadurch gekennzeichnet, daß derjenige Teil der Zone, dessen Akzeptor einen niedrigeren Metallgehalt aufweist, nicht mehr als 45 Prozent der Gesamtzone, insbesondere 20 bis 40 Prozent der Zone, ausmacht.

6. Ein Verfahren wie in Anspruch 1 beansprucht, dadurch gekennzeichnet, daß nichtvorerhitzte Luft oder Luft mit einer Temperatur, die wesentlich niedriger ist als die Temperatur des Akzeptorbettes, für die getrennte oxidative Behandlung verwendet wird.